Europäisches Patentamt

European Patent Office

Office européen des brevets

(19)

(11) Numéro de publication : **0 032 090**

**B1**

(12) **FASCICULE DE BREVET EUROPÉEN**

(45) Date de publication du fascicule du brevet :
29.02.84

(21) Numéro de dépôt : **80401839.8**

(22) Date de dépôt : **22.12.80**

(51) Int. Cl.³ : **B 60 Q   1/50**, G 01 F   9/00

(54) **Dispositif indicateur de consommation de carburant pour véhicule automobile.**

(30) Priorité : 03.01.80 FR 8000053

(43) Date de publication de la demande :
15.07.81 Bulletin 81/28

(45) Mention de la délivrance du brevet :
29.02.84 Bulletin 84/09

(84) Etats contractants désignés :
**DE GB IT SE**

(56) Documents cités :
**FR-A- 1 113 984**
**FR-A- 2 369 117**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Boudeville, Jean Claude**
**6, Clos Jean Vilar**
**F-78280 Guyancourt (FR)**

(74) Mandataire : **Réal, Jacques et al**
**Régie Nationale des Usines Renault 8-10, avenue**
**Emile Zola**
**F-92109 Boulogne-Billancourt (FR)**

Dispositif indicateur de consommation de carburant pour véhicule automobile

La présente invention se rapporte à un dispositif destiné à indiquer à tout moment au conducteur d'un véhicule automobile s'il est ou non dans une phase de conduite économique.

Parmi les dispositifs connus qui poursuivent ce but et accessibles dans le commerce, on connaît des appareils qui mesurent la dépression dans la tubulure d'admission du moteur. Mais la mesure manque de précision et les indications sont difficilement exploitables.

Quant aux économiseurs montés à demeure sur le carburateur du véhicule, ils ne sont pas appropriés aux nouveaux moteurs à injection et donc ne concernent qu'une catégorie de véhicules à carburateurs.

On connaît également notamment par le brevet FR-A-2 369 117 des dispositifs de mesure et d'indication de la consommation de carburant prenant en compte une ou plusieurs variables telles que la vitesse du moteur ou du véhicule, l'ouverture du papillon des gaz et le rapport de transmission sélectionné, « informations traitées dans un circuit électronique d'interfaces à plusieurs portes logiques en vue de renseigner le conducteur sur la conduite économique à adopter, au moyen d'éléments de signalisation différenciés et disposés au tableau de bord ». Mais il s'agit d'instruments donnant une indication globale sur la consommation calculée à partir des informations précédentes, en vue d'un affichage au tableau de bord sous forme numérique ou analogique.

En d'autres termes, ces indicateurs renseignent le conducteur sur sa consommation moyenne ou instantanée, mais ne donnent pas d'indications précises quant aux moments et aux causes d'une surconsommation et à la conduite à adopter pour y remédier.

En effet, bien qu'un instrument de mesure donne des informations quantitatives plus précises qu'un simple signal d'alarme, le conducteur peut ne pas voir ou mal interpréter une indication excessive d'un instrument, préoccupé qu'il est à conduire son véhicule.

Le but de la présente invention est de pallier les inconvénients des dispositifs connus et de réaliser un dispositif à la fois précis, complet et d'utilisation pratique, renseignant immédiatement le conducteur au moyen de diverses alarmes, qu'il se trouve ou non dans une phase de conduite économique, chaque alarme ou élément de signalisation ayant une signification bien déterminée sur la cause de la surconsommation et sur le comportement à adopter.

Par ailleurs, le dispositif selon l'invention peut être monté indifféremment sur tous les types de véhicules à carburateur classique ou à injection.

La présente invention a donc pour objet un dispositif indicateur de consommation de carburant pour véhicule automobile, du type ci-dessus, prenant en compte des informations telles que le régime du moteur, le rapport de la vitesse engagée et le degré d'ouverture du papillon des gaz, caractérisé en ce que le circuit d'interfaces comprend :

— une première porte logique ET dont une entrée reçoit l'information sur le régime moteur et dont la sortie alimente un premier voyant qui s'allume lorsque le régime moteur dépasse un seuil maximum autorisé, de façon connue en soi,

— une deuxième porte logique ET dont une entrée reçoit la sortie de la première porte, dont une autre entrée reçoit l'information sur l'ouverture du papillon et dont la sortie alimente un deuxième voyant qui s'allume lorsque l'ouverture du papillon dépasse un seuil maximum autorisé,

— et une troisième porte logique ET dont les entrées sont branchées en parallèle sur celles de la deuxième porte et dont la sortie alimente un troisième voyant qui s'allume lorsque le régime moteur et l'ouverture du papillon restent en dessous de leurs seuils respectifs maximum.

De préférence, les éléments de signalisation sont des voyants lumineux de couleurs différentes affectés respectivement à chaque information. Mais ils pourraient être aussi bien réalisés sous la forme d'alarmes sonores de tonalités différentes, moyennant une modification des circuits de commande à la portée de l'homme de métier.

C'est ainsi que, dans l'exemple décrit ci-après, le circuit d'interfaces reçoit trois séries d'informations :

1. Une information logique sur le régime du moteur, donnée par la période du signal détecté au primaire de la bobine d'allumage, puis mise en forme dans un circuit d'entrée dérivé d'un circuit connu et décrit dans la demande française FR-A-2 268 268 déposée par le présent demandeur.

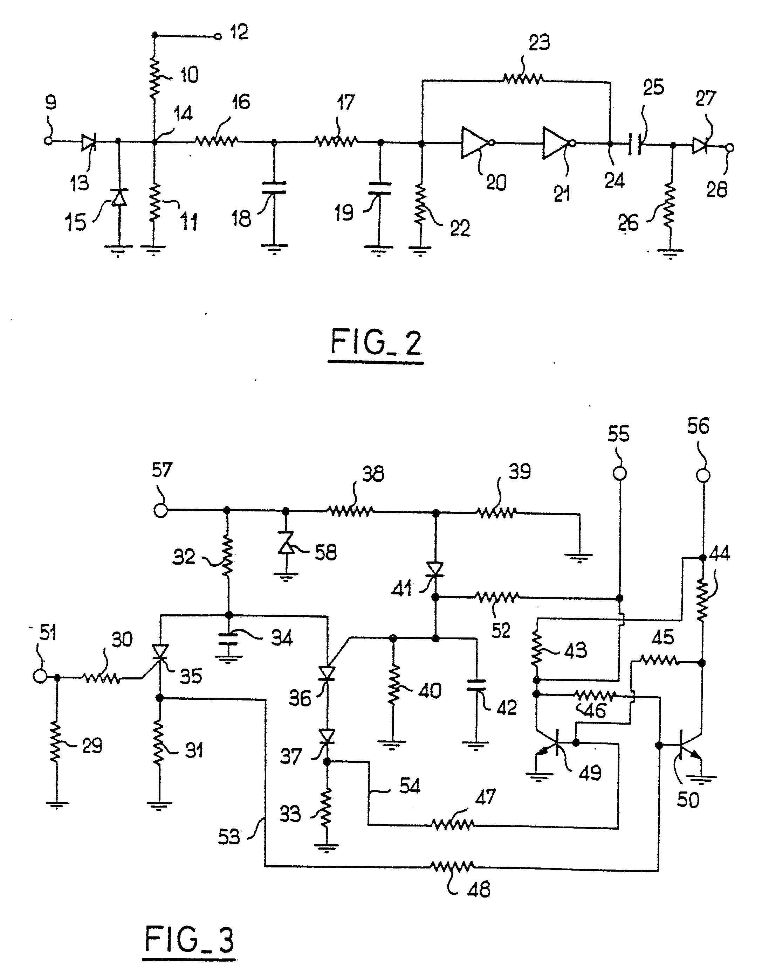

Plus précisément, il s'agit d'un circuit générateur de signaux rectangulaires suivi d'une différenciation et d'une suppression de polarité négative (Figure 3 et texte relatif). Après mise en forme, la période du signal résultant est comparée à une période de référence élaborée dans un générateur-comparateur appelé périodemètre associé à un générateur de seuil et à une commande d'hystérésis, circuits connus en soi d'une autre demande française antérieure FR-A-2 461 857, par le présent demandeur, et décrits, en particulier, en référence aux figures 8 à 13. Globalement, l'information logique à la sortie du périodemètre change d'état lorsque la période mesurée est inférieure à la période de référence et correspond à un régime moteur trop élevé.

2. Une information logique donnée par un contacteur placé sur la boîte de vitesses avec changement d'état logique lors du passage au rapport de vitesse le plus élevé.

3. Une information logique donnée par un contacteur coopérant avec le papillon des gaz avec changement d'état logique lors du dépassement d'une ouverture maximale prédéterminée.

Le circuit d'interfaces selon l'invention est réalisé, à titre d'exemple, à partir de circuits logiques utilisant des portes ET à deux entrées et dont les sorties attaquent les circuits de commande des voyants lumineux placés au tableau de bord, assortis éventuellement de circuits de modulation de brillance selon l'utilisation de jour ou de nuit du véhicule. Ces deux derniers circuits sont également connus en soi et ont été décrits dans la demande française antérieure FR-A-2 447 286 déposée par le présent demandeur.

L'intérêt de la présente invention réside donc dans la combinaison des différents circuits dont certains sont connus et, en particulier, dans la réalisation du circuit d'interfaces dont le rôle est d'établir des priorités de prise en compte entre les informations qui lui sont soumises. C'est ainsi que l'information sur le régime moteur est prioritaire sur celle sur l'ouverture du papillon des gaz et que l'information sur le régime moteur est automatiquement supprimée lorsque le rapport de vitesse le plus élevé est engagé.

Sur les autres rapports intermédiaires, le conducteur est alerté par un voyant qui s'allume lorsque le régime du moteur est trop élevé, ce qui signifie qu'il doit passer un rapport plus élevé.

De la même manière, un autre voyant lui signale que l'ouverture du papillon des gaz est trop importante et qu'il doit, par conséquent, lever le pied car sa conduite est trop brutale.

La conduite la plus économique est signalée par un troisième voyant qui ne s'allume que lorsque les deux premiers sont éteints.

D'autres particularités et avantages de l'invention apparaîtront à la lecture de la description qui suit, en référence au dessin annexé sur lequel :

la figure 1 est un schéma fonctionnel de l'ensemble du dispositif,

la figure 2 représente le circuit d'entrée,

la figure 3 représente le circuit du périodemètre associé à ses circuits connexes,

la figure 4 représente le circuit d'interfaces et le circuit d'alimentation du dispositif,

la figure 5 représente les circuits de commande et de modulation de brillance des voyants de signalisation.

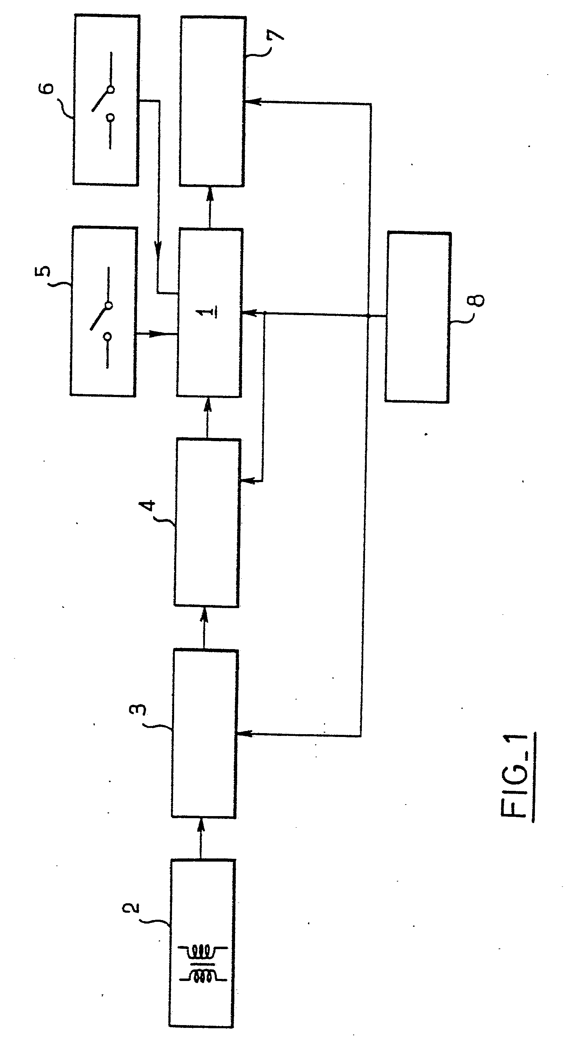

Le dispositif représenté dans son ensemble à la figure 1, sous forme de blocs fonctionnels, comprend un circuit d'interfaces 1 recevant les trois sortes d'informations précitées, à savoir une première information sur le régime du moteur, c'est-à-dire sur sa vitesse de rotation, captée sur le primaire de la bobine d'allumage 2, puis traitée successivement à travers un circuit d'entrée ou de mise en forme 3 et un périodemètre 4 comprenant ses circuits associés de seuil, d'hystérésis et de mémoire ; une seconde information sur le rapport de vitesse engagé, donnée par un contacteur 5 ouvert sur tous les rapports intermédiaires et fermé seulement sur le rapport le plus élevé ; une troisième information sur le degré d'ouverture du papillon des gaz, donnée par un autre contacteur 6 qui se ferme lorsque le papillon dépasse une ouverture maximale prédéterminée et traduit une consommation excessive. Les informations sont traitées sous forme logique binaire dans le circuit d'interfaces 1 qui établit les priorités et délivre trois signaux de sortie venant attaquer les circuits correspondants de commande et de signalisation 7.

Le dispositif est complété par un circuit d'alimentation 8 commun aux autres circuits.

Le circuit d'entrée 3 représenté sur la figure 2 est relié par la borne d'entrée 9 au primaire de la bobine d'allumage 2. L'alimentation positive est obtenue par un point diviseur à résistances 10, 11, à partir de la borne 12 alimentée depuis le circuit d'alimentation 8. La diode 13 empêche le potentiel positif, obtenu au point commun 14 des résistances, de retourner vers le primaire de la bobine, tandis que la diode 15 protège le montage contre les fortes tensions négatives qui peuvent provenir de ladite bobine. Le signal traverse ensuite un filtre passebas à deux cellules, formé par les résistances 16, 17 et les condensateurs 18, 19, ce qui permet d'obtenir une première mise en forme des impulsions détectées sur la bobine d'allumage 2. Le signal traverse ensuite un circuit dit « Trigger de Schmitt » formé par les deux inverseurs 20, 21 et les deux résistances 22, 23 dont le fonctionnement est bien connu de l'homme de l'art.

Ce circuit est en fait un générateur de signaux rectangulaires à réaction positive et hystérésis et permet d'obtenir en sortie, sur la borne 24, un signal rectangulaire dont la fréquence de répétition est égale à celle du signal présent au primaire de la bobine. Le signal de sortie est ensuite dérivé par le condensateur 25 et la résistance 26 formant un circuit différenciateur, la diode 27 ne laissant passer vers la borne de sortie 28 que les impulsions positives aptes à commander correctement le circuit périodemètre 4.

La description et le fonctionnement détaillés du périodemètre et des circuits associés de la figure 3 sont déjà décrits dans la demande précitée FR-A-2 461 857 à laquelle il suffit de se reporter. Nous nous bornerons donc à identifier les éléments des différents circuits en présence et à simplifier la description du fonctionnement.

Le circuit périodemètre ou générateur-comparateur de temps comprend les résistances 29 à 33, le condensateur 34, le thyristor 35, le transistor unijonction programmable 36 et la diode 37.

Le générateur de seuil comprend les résistances 38, 39, 40, la diode 41 et le condensateur 42.

La bascule bistable comprend les résistances 43 à 48 et les deux transistors NPN 49 et 50.

Le générateur-comparateur de temps compare la période du signal d'entrée sur la borne 51, venant de la sortie 28 du circuit de mise en forme 3, à la durée d'une période de référence fournie par le générateur de seuil, tandis que la bascule bistable mémorise le résultat de la comparaison. Le condensateur 34 se charge lentement à travers la résistance 32 et se décharge rapidement par deux voies différentes : une première voie composée du thyristor 35 déclenché à chaque fois qu'il reçoit une impulsion positive venant de l'entrée 51 et une deuxième voie composée du transistor unijonction programmable 36 déclenché lorsque la charge du condensateur 34 atteint la tension d'amorçage fournie par le générateur de seuil et réglée par la résistance 52 qui constitue la commande d'hystérésis du montage.

Suivant que la période sur la borne d'entrée 51 permet ou non à la tension de charge du condensateur 34 d'atteindre le seuil d'amorçage du transistor 35, une impulsion apparaît sur l'une ou l'autre des résistances 31, 33 et est envoyée sur l'une ou l'autre des voies de commande 53, 54 de la bascule bistable qui garde en mémoire le résultat de la comparaison jusqu'à la période suivante. Le branchement de la bascule est tel que le transistor 50 reste bloqué et le transistor 49 saturé lorsque la période du signal sur la borne 51 est supérieure à la période du signal de référence obtenue quand la tension de charge du condensateur 34 atteint le seuil d'amorçage du transistor unijonction 36, et inversement.

Au total, la tension présente sur la borne de sortie 55 du montage est proche de la tension d'alimentation positive sur la borne 56 et donc au niveau haut lorsque la période du signal apparaissant au primaire de la bobine d'allumage est inférieure à la période de référence, c'est-à-dire lorsque le régime moteur est trop élevé.

Dans le cas contraire, la tension présente sur la borne de sortie 55 est au niveau bas et voisine de la masse.

Il faut encore remarquer la présence d'une deuxième ligne d'alimentation positive 57 dont la tension est stabilisée par une diode Zener 58, ce qui assure le bon fonctionnement du circuit malgré les fluctuations normales de la tension du réseau de bord du véhicule.

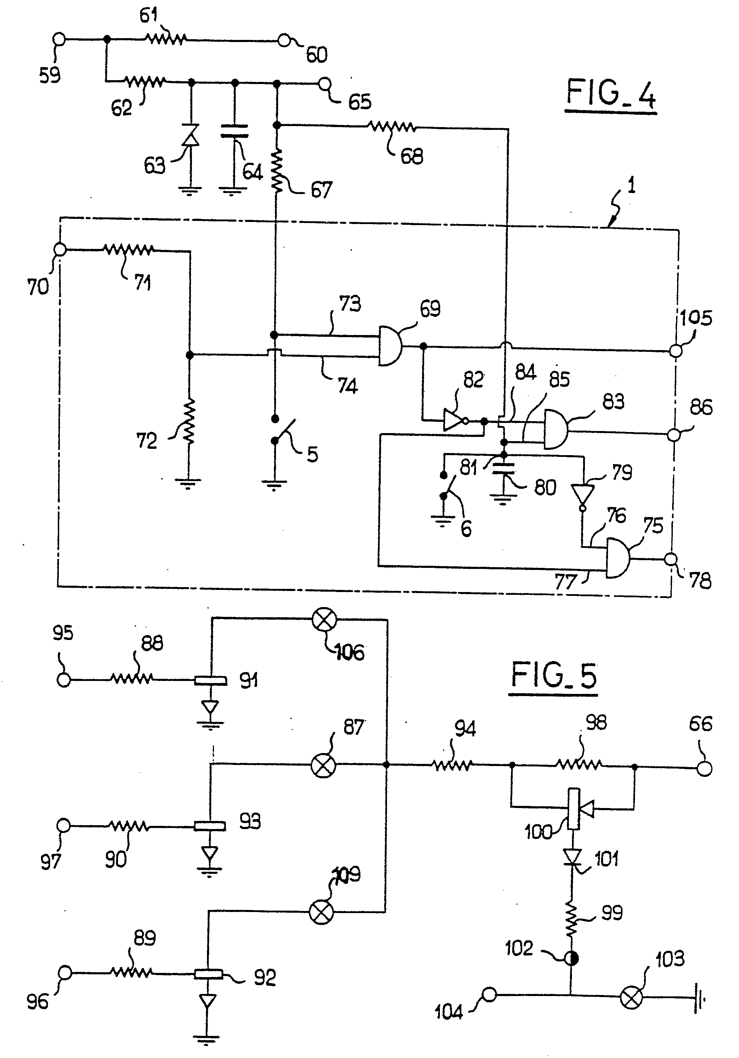

Le circuit d'alimentation et de protection 8 de la figure 1 est représenté en détail en haut de la figure 4 dont l'encadré reproduit le circuit d'interfaces 1 selon l'invention.

Une borne d'entrée 59 est reliée au circuit d'alimentation positive du réseau de bord du véhicule, en aval de la clé de contact par rapport à la batterie de bord. La borne 60, par l'intermédiaire de la résistance 61, alimente la borne 57 du circuit périodemètre 4. A la borne 59 est reliée également une résistance 62 qui, associée à la diode Zener 63 et au condensateur 64, permet de disposer sur la borne 65, reliée à la borne 56 du périodemètre, d'une tension positive filtrée de tous les parasites pouvant apparaître sur la borne 59. Cette tension positive sert aussi à l'alimentation des autres circuits cités dans la présente description, en particulier le circuit de mise en forme, par la borne 12, et le circuit de commande des voyants de signalisation, par la borne 66.

De plus, la tension sur la borne 65 polarise, à travers les résistances 67, 68, les portes logiques du circuit d'interfaces décrit ci-après. Dans l'exemple de réalisation, représenté à la figure 4, le circuit d'interfaces se compose essentiellement de trois portes logiques ET à deux entrées. La première porte ET 69 reçoit sur sa première entrée 73 le signal donné par le contacteur 5 de rapport engagé, signal polarisé par la tension positive à la sortie de la résistance 67, tandis que l'autre borne du contacteur est reliée à la masse. La première entrée de la porte 69 est donc au niveau haut lorsque le contacteur 5 est ouvert, c'est-à-dire lorsque l'un quelconque des rapports intermédiaires est engagé. La deuxième entrée 74 de la porte ET 69 reçoit le signal de sortie 55 du périodemètre appliqué sur la borne d'entrée 70 du circuit d'interfaces, signal dont la tension est ramenée à un niveau correct au moyen du pont diviseur à résistances 71 et 72. La sortie 105 de la première porte ET est affectée à la commande du premier voyant de signalisation 106 qui s'allume donc lorsque les états logiques des deux entrées sont au niveau haut, c'est-à-dire lorsque le contacteur 5 est ouvert (rapports intermédiaires) et que la sortie du périodemètre 55 est au niveau haut (régime moteur trop élevé). Lorsque le conducteur passe le rapport le plus élevé, le contacteur 5 met la première entrée 73 à la masse et le voyant 106 s'éteint ; l'information sur le régime moteur est alors supprimée, car la sortie 105 reste au niveau bas quel que soit l'état logique sur l'autre entrée 74.

Une deuxième porte logique ET 75, à deux entrées 76, 77, commande par sa sortie 78 un deuxième voyant 109, de couleur différente, prévu pour signaler l'ouverture du papillon des gaz. Cette porte reçoit sur la première entrée 76 le signal donné par le contacteur 6 du papillon, signal polarisé par la tension positive à la sortie de la résistance 68 du circuit d'alimentation et inversé à travers un inverseur logique 79 avant d'être appliqué sur la porte 75. L'autre borne du contacteur 6 est reliée à la masse. Par ailleurs, un condensateur 80 monté en parallèle sur le contacteur 6 a pour rôle d'éliminer les parasites dus aux rebondissements du contact 6 lors de son fonctionnement. La première entrée 76 de la porte 75 est donc au niveau haut lorsque le point commun 81 en amont de l'inverseur 79 est lui-même au niveau bas, condition réalisée lorsque le contacteur 6 est fermé, ce qui signifie que le papillon des gaz est trop ouvert et que la consommation est excessive. La deuxième entrée 77 de la porte 75 est reliée à la sortie 105 de la première porte 69 par l'intermédiaire d'un inverseur 82. Ainsi, la deuxième porte ne peut signaler l'information sur l'ouverture du papillon des gaz que lorsque la deuxième entrée 77 est au niveau haut et donc la sortie 105 de la première porte au niveau bas, c'est-à-dire lorsque le contacteur 5 est fermé (rapport le plus élevé engagé). Au contraire, sur les rapports intermédiaires, la deuxième entrée sur la porte 75 est au niveau bas et le voyant 109 ne peut s'allumer : il y a donc priorité à l'information sur le régime moteur par rapport à l'information sur l'ouverture du papillon, priorité qui n'existe que sur les rapports intermédiaires. Sur le rapport le plus élevé, seule subsiste l'information sur le papillon des gaz puisque le conducteur ne peut plus agir que sur ce paramètre pour rétablir une conduite économique.

L'indication de la conduite économique est donnée par la sortie d'une troisième porte logique ET 83, à deux entrées 84, 85, dont la sortie 86 vient commander un troisième voyant 87 de couleur différente des deux autres. La première entrée 84 est reliée à la sortie de l'inverseur 82 et donc commune avec l'entrée 77 de la deuxième porte 75. La deuxième entrée 85 est reliée au point commun 81 à la sortie du contacteur 6 du papillon des gaz.

Dans ces conditions, le voyant 87 de conduite économique ne s'allume que lorsque le contacteur 6 est ouvert (ouverture raisonnable du papillon) et que le régime du moteur n'est pas trop élevé (niveau bas sur la deuxième entrée 74 de la première porte 69).

Toutefois, cette dernière information n'est prise en compte et n'a de sens que sur les rapports intermédiaires (niveau haut sur la première entrée 73 de la porte 69).

La figure 5 illustre les voyants de signalisation 106, 109, 87 et leurs circuits de commande connus en soi constitués des résistances 88, 89, 90 et des transistors NPN 91, 92, 93 respectivement. La résistance 94 permet de régler le courant circulant dans le voyant en fonctionnement et peut, à la limite, avoir une valeur nulle. Les circuits de commande reçoivent sur leurs bornes d'entrée 95, 96, 97 les signaux présents respectivement sur les sorties 105, 78, 86 du circuit d'interfaces. Lorsque le signal sur l'une quelconque de ces bornes d'entrée est au niveau haut, le transistor correspondant devient conducteur et autorise l'allumage du voyant correspondant, à travers le circuit de commutation jour/nuit, dont le fonctionnement est connu en soi et brièvement rappelé ci-après :

Ce circuit est constitué par les résistances 98, 99, le transistor PNP 100 et la diode 101. La borne 66 reçoit la tension d'alimentation positive et la borne 102 est reliée à la ligne d'alimentation positive 104 des feux de position 103 du véhicule.

Lorsque les feux de position sont éteints, la base du transistor 100 est reliée à la masse du véhicule par l'intermédiaire de la diode 101 polarisée dans le sens direct, par la résistance 99 qui limite le courant de base du transistor 100, et par l'intermédiaire de la faible résistance constituée par les filaments des feux de position 103. Dans ces conditions, le transistor 100 est conducteur et court-circuite la résistance 98. Les voyants sont donc alimentés sous une tension voisine de celle de la borne d'alimentation 66. Lorsque la borne 104 est alimentée par la tension positive d'alimentation du véhicule (feux de position allumés), la diode 101 se trouve polarisée dans le sens de non-conduction, ce qui provoque le blocage du transistor 100. De ce fait, la résistance 98 se trouve en série avec le voyant en fonctionnement et diminue sa brillance pour ne pas gêner le conducteur de nuit.

## Revendications

1. Dispositif indicateur de consommation de carburant pour véhicule automobile prenant en compte des informations telles que le régime du moteur (2), le rapport de la vitesse engagée (5) et le degré d'ouverture du papillon des gaz (6), informations traitées dans un circuit électronique d'interfaces (1) à plusieurs portes logiques en vue de renseigner le conducteur sur la conduite économique à adopter, au moyen d'éléments de signalisation (106, 109, 87) différenciés et disposés au tableau de bord, caractérisé en ce que le circuit d'interfaces (1) comprend :

— une première porte logique ET (69) dont une entrée (74) reçoit l'information sur le régime moteur et dont la sortie (105) alimente un premier voyant (106) qui s'allume lorsque le régime moteur dépasse un seuil maximum autorisé,

— une deuxième porte logique ET (75) dont une entrée (77) reçoit la sortie de la première porte (69), dont une autre entrée (76) reçoit l'information (6) sur l'ouverture du papillon et dont la sortie (78) alimente un deuxième voyant (109) qui s'allume lorsque l'ouverture du papillon dépasse un seuil maximum autorisé,

— et une troisième porte logique ET (83) dont les entrées (84, 85) sont branchées en parallèle sur celles de la deuxième porte et dont la sortie (86) alimente un troisième voyant (87) qui s'allume lorsque le régime moteur et l'ouverture du papillon restent en dessous de leurs seuils respectifs maximum.

2. Dispositif selon la revendication 1, caractérisé en ce que la sortie de la première porte (69) est reliée aux entrées des deuxième et troisième portes (75, 83) par l'intermédiaire d'un inverseur logique (82) et en ce que l'information sur l'ouverture du papillon (6) est appliquée sur la deuxième porte (75) par l'intermédiaire d'un autre inverseur logique (79) et directement sur la troisième porte (83).

3. Dispositif selon la revendication 1, caractérisé en ce que la première porte (69) reçoit en outre une information sur le rapport de vitesse engagée par l'intermédiaire d'un contacteur (5) placé sur la boîte de vitesses et qui se ferme sur le rapport le plus élevé.

4. Dispositif selon la revendication 1, caractérisé en ce que l'information sur le papillon est donnée par un contacteur (6) coopérant avec le papillon et qui se ferme au-delà d'une ouverture maximum autorisée.

5. Dispositif selon la revendication 1, caractérisé en ce que l'information sur le régime du moteur est donnée par la comparaison d'un signal détecté au primaire de la bobine d'allumage (2), puis mis en forme (3) avec un signal de référence élaboré par un périodemètre (4).

## Claims

1. Indicator device for fuel consumption for an automobile vehicle, taking into account data such as the normal running of the engine (2), the engaged speed (5) transmission ratio, the opening degree of the disc-type gas throttle (6), data processed in electronic interface circuits (1) having several logic gates with an aim of informing the conductor as to the economic drive to be adopted, by means of differentiated visua'isation means (106, 109, 87) disposed on the dash-board, characterized in that the interface circuits (1) comprise ;

— a first logic gate AND (69), one input (74) of which receives data as to the running of the engine and the output (105) of which feeds a first signal (106) that lights up when the running of the engine exceeds a maximum authorized threshold.

— a second logic gate AND (75), one input (77) of which receives the output of the first gate (69), another input (76) of which receives data (6) on the opening of the disc-type throttle and the output (78) of which feeds a second signal (109) that lights up when the opening of the disc type throttle exceeds a maximum authorized threshold.

— and a third logic gate AND (83), the inputs (84, 85) of which are connected parallel-wise on those of the second gate and the output (86) of which feeds a third signal (87) that lights up when the running of the engine and the opening of the disc-type throttle remain below their respective maximum thresholds.

2. Device according to claim 1, characterized in that the output of the first gate (69) is connected to the inputs of the second and third gates (75, 83) through the intermediary of a logic inverter (82) and in that the data on the opening of the disc-type throttle (6) is applied on the second gate (75) through the intermediary of another logic inverter (79) and directly on the third gate (83).

3. Device according to claim 1, characterized in that the first gate (69) receives, furthermore, data on the transmission ratio corresponding to the speed engaged by the intermediary of a contactor (5) placed on the gear box and that closes on the highest ratio.

4. Device according to claim 1, characterized in that the data on the disc-type throttle is given by a contacter (6) cooperating with the disc-type throttle and that closes beyond a maximum authorized opening.

5. Device according to claim 1, characterized in that data on the running of the engine is given by comparison of a signal detected at the primary of the ignition coil (2), then formed (3) with a reference signal elaborated by a periodimeter (4).

**Ansprüche**

1. Kraftstoffverbrauchsanzeigevorrichtung für Kraftfahrzeuge, die solche Informationen wie Motorlauf (2), Übersetzungsverhältnis des eingelegten Gangs und Öffnungsgrad des Drosselventils (6) berücksichtigt, Informationen, die in einer elektronischen Vorrichtung mit Zwischenschaltungen (1) und mehreren logischen Gattern verarbeitet werden, um dem Fahrer über die anzunehmende wirtschaftliche Fahrweise Auskunft zu geben unter Zuhilfenahme von gesonderten, auf dem Armaturenbrett angebrachten Anzeigeelementen (106, 109, 87), dadurch gekennzeichnet, dass die Zwischenschaltungsvorrichtung enthält :

— Ein erstes logisches « UND »-Gatter (69), von dem ein Eingang (74) die Information über den Motorlauf erhält und dessen Ausgang (105) eine erste Anzeigelampe speist, die aufleuchtet, wenn der Motorlauf einen maximal zulässigen Schwellenwert überschreitet.

— Ein zweites logisches « UND »-Gatter (75), von dem ein Eingang (77) den Ausgang des ersten Gatters (69) aufnimmt, von dem ein anderer Eingang (76) die Information (6) über die Öffnung des Drosselventils erhält und dessen Ausgang (78) eine zweite Anzeigelampe (109) speist, die aufleuchtet, wenn die Öffnung des Drosselventils einen maximal zulässigen Schwellenwert überschreitet.

— Und ein drittes logisches « UND »-Gatter (83) dessen Eingänge (84, 85) mit denen des zweiten Gatters parallelgeschaltet sind und dessen Ausgang (86) eine dritte Anzeigelampe (87) speist, die aufleuchtet, wenn der Motorlauf und die Öffnung des Drosselventils unterhalb ihrer jeweiligen maximalen Schwellenwerte bleiben.

2. Vorrichtung nach Anspruch 1, dadurch gekennzeichnet, dass der Ausgang des ersten Gatters (69) mit den Eingängen des zweiten und dritten Gatter über einen logischen Inverter (82) verbunden ist und dadurch, dass die Information über die Öffnung des Drosselventils (6) unter Zuhilfenahme eines anderen logischen Inverters (79) an ein zweites Gatter (75) und direkt an ein drittes Gatter (83) angebracht wird.

3. Vorrichtung nach Anspruch 1, dadurch gekennzeichnet, dass das erste Gatter (69) zudem eine Information über das Übersetzungsverhältnis des eingelegten Gangs unter Zuhilfenahme eines auf dem Getriebe angebrachten und bei dem grössten Übersetzungsverhältnis sich schliessenden Kontaktgebers (5) erhält.

4. Vorrichtung nach Anspruch 1, dadurch gekennzeichnet, dass die Information über das Drosselventil von einem mit dem Drosselventil zusammenarbeitenden und sich bei Überschreiten einer maximal zulässigen Öffnung schliessenden Kontaktgeber geliefert wird.

5. Vorrichtung nach Anspruch 1, dadurch gekennzeichnet, dass die Information über den Motorlauf durch Vergleich eines an der Primärseite der Zündspule (2) abgenommenen und dann geformten (3) Signals mit einem durch ein Periodenmeter erstellten Bezugssignal erhalten wird.

FIG_1

0 032 090

FIG_2

FIG_3

2

FIG_4

FIG_5